# EUROPÄISCHE PATENTANMELDUNG

(11) **EP 3 534 186 A1**
(43) Veröffentlichungstag der Anmeldung: **04.09.2019**
(21) Anmeldenummer: 19157535.6
(22) Anmeldetag: 15.02.2019
(51) Int. Cl.: G01V 8/10

(54) **OPTOELEKTRONISCHER SENSOR UND HERSTELLUNGSVERFAHREN FÜR EINE FRONTSCHEIBE**

(30) Priorität: 02.03.2018 DE 102018104787
(71) Anmelder: Sick AG, 79183 Waldkirch (DE)
(72) Erfinder: Schmitz, Dr. Stephan, 79194 Gundelfingen (DE); Brender, Tamara, 79111 Freiburg (DE); Brucker, Frank, 77716 Haslach (DE)

(57) **Zusammenfassung**

Es wird ein optoelektronischer Sensor (10) angegeben, der einen Lichtsender (12) zum Aussenden eines polarisierten Lichtstrahls (18) in einen Überwachungsbereich (20), einen Lichtempfänger (32) zum Empfangen des in dem Überwachungsbereich (20) zurückgeworfenen Lichtstrahls (26) mit bestimmten Polarisationseigenschaften und zum Erzeugen eines Empfangssignals, eine Steuer- und Auswertungseinheit (34) zum Erfassen von Objekten (22, 24) in dem Überwachungsbereich (20) durch Auswertung des Empfangssignals sowie eine Frontscheibe (40) aufweist. Dabei ist die Frontscheibe (40) spannungsdoppelbrechungsfrei.

## Beschreibung

Die Erfindung betrifft einen optoelektronischen Sensor und ein Herstellungsverfahren einer Frontscheibe nach dem Oberbegriff von Anspruch 1 beziehungsweise 11.

Die Objekterkennung in einem Überwachungsbereich ist eine der häufigsten Aufgaben eines optoelektronischen Sensors. Vielfach ist das mit der Bestimmung einer Objekteigenschaft verbunden, etwa des Abstands zu dem Objekt. Manche Sensoren haben die etwas spezifischere Funktion, ein kooperatives Ziel zu erfassen beziehungsweise zu reagieren, sobald ein kooperatives Ziel nicht mehr erkannt wird.

Ein einfach aufgebauter derartiger Sensor ist eine Reflexionslichtschranke. Sie sendet aus einer Lichtquelle einen Lichtstrahl auf einen am gegenüberliegenden Ende des Überwachungsbereichs angebrachten Reflektor, von dem der Lichtstrahl zu der Reflexionslichtschranke zurückgeworfen wird. Ist der Lichtstrahl unterbrochen, so empfängt der Lichtempfänger der Reflexionslichtschranke nichts oder zumindest weniger Licht und löst eine Objekterkennungsfunktion aus.

Tritt aber ein spiegelndes oder sehr helles Objekt in den Strahlengang ein, so kommt womöglich so viel Licht zurück, dass die Lichtschranke fälschlich keine Strahlenunterbrechung erkennt. Dieses Problem kann mit polarisiertem Licht gelöst werden. Ein Retroreflektor als kooperatives Ziel erhält die Polarisation eines polarisierten Sendestrahls und dreht nur die Polarisationsrichtung. Mit einem passend gekreuzt angeordneten Polarisationsfilter vor dem Lichtempfänger kann daher der Empfangsstrahl weitestgehend ungehindert passieren. Wird der Sendestrahl dagegen von einem Spiegel, einer spiegelnden Fläche oder einem hellen Objekt remittiert, so wird entweder die Polarisationsrichtung nicht geändert oder das Licht verliert die Polarisationseigenschaften, so dass der Empfangsstrahl von dem Polarisationsfilter nahezu komplett ausgeblendet wird. Auch Spiegel und helle Objekte werden dadurch als Strahlunterbrechung erkannt.

Ein Beispiel für einen komplexeren Sensor ist ein Laserscanner. Darin überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Die Abtastung der Überwachungsebene wird üblicherweise dadurch erreicht, dass der Sendestrahl auf einen rotierenden Drehspiegel trifft. Lichtsender, Lichtempfänger sowie zugehörige Elektronik und Optik sind im Gerät fest montiert und vollziehen die Drehbewegung nicht mit. Es ist aber alternativ auch denkbar, den Drehspiegel durch eine mitbewegte Abtasteinheit zu ersetzten. Beispielsweise rotiert in der DE 197 57 849 B4 der gesamte Messkopf mit Lichtsender und Lichtempfänger.

Die DE 198 01 632 C2 offenbart ein Beispiel einer Reflexionslichtschranke nach dem eingangs erläuterten Prinzip. Wie bei allen herkömmlichen Reflexionslichtschranken wird dabei jedoch unzureichend darauf geachtet, dass die Polarisation auch erhalten bleibt. In der Praxis haben nämlich die diversen optischen Elemente im Strahlengang des Sensors einen Einfluss auf die Polarisationserhaltung, der durch nicht mehr passende Polarisationsdrehung zu Lichtverlusten oder gar Fehldetektionen führt. Mit anderen Worten sind die Polarisationseigenschaften bei Wiedereintritt am empfangsseitigen Polarisationsfilter nicht so, wie dies dem einfachen theoretischen Konzept nach sein sollte. Die DE 198 01 632 C2 erwähnt aber weder sende- und empfangsseitige Optiken noch eine Frontscheibe, somit erst recht nicht deren beeinträchtigende Wirkung auf die Polarisation. Praktisch können beispielsweise Kunststofflinsen im Strahlengang des polarisierten Lichts dessen Polarisierung nahezu komplett aufheben.

In der DE 10 2006 048 297 A1 werden Fresnellinsen oder Beugungsgitter als Sende- und Empfangsoptiken eingesetzt, die nur eine geringe spannungsoptische Doppelbrechung aufweisen. Die Optiken sind gleichzeitig als Lichtaustrittsfenster und Lichteintrittsfensters Bestandteil des Gehäuses. Die Beschränkung auf solche speziellen Optiken ist aber meist nicht erwünscht. Es ist außerdem ein Widerspruch, die Frontscheibe einerseits mit derartigen Optiken strukturieren zu wollen und gleichzeitig zu fordern, dass dies spannungsarm bleibt. In der Praxis gelingt es aufgrund dieser Überladung mit zu vielen Forderungen nicht, eine entsprechende Frontscheibe herzustellen. Es bleibt also bei einem signifikanten Einfluss auf die Polarisationseigenschaften. Im Übrigen wäre der Ansatz auch nicht von einstrahligen auf komplexere Systeme erweiterbar, wie beispielsweise einen Laserscanner mit einer komplexen dreidimensionalen Freiformfläche als Austrittsfenster beziehungsweise Frontscheibe, weil nicht ersichtlich ist, wie dort eine Optik überhaupt in die Frontscheibe integriert werden könnte, erst recht unter der Zusatzbedingung, dass dies spannungsarm bleibt.

Die DE 43 43 457 C1 befasst sich mit einer optoelektronischen Vorrichtung zum Erkennen von transparenten Gegenständen. Dabei gibt es aber kein kooperatives Ziel, Sender und Empfänger sind einander gegenüberliegend nach dem Prinzip einer Einweglichtschranke aufgebaut, und das zu erkennende Objekt befindet sich dazwischen. Sende- und empfangsseitig sind eine Kombination aus Polarisator und einer Flüssigkristallschicht vorgesehen. Damit wird ein Arbeitspunkt mit passenden Polarisationsrichtungen der beiden Filter eingestellt, und eine transparente Folie wird dann im Betrieb daran erkannt, dass sie die erwartete Polarisationsdrehung erzeugt und somit der Sendelichtstrahl zum Empfänger passieren kann. Auf störende Polarisationseffekte durch optische Elemente der Vorrichtung geht die DE 43 43 457 C1 nicht ein, und wegen ihres speziellen Aufbaus wäre das auch nicht auf Sensoren mit kooperativem Ziel übertragbar.

Auch für Laserscanner wurde in der EP 2 722 684 A1 bereits über die Verwendung von polarisiertem Licht nachgedacht, allerdings nicht zur verlässlichen Erkennung eines kooperativen Ziels, sondern für eine Außenanwendung. Der herkömmliche Laserscanner weist einen Lichtsender auf, dessen Sendelichtstrahlen linear polarisiert sind. Vor dem Lichtempfänger ist ein Polarisationsstrahlteiler angeordnet, der die orthogonale und parallele Polarisationskomponente räumlich getrennt voneinander auf den Lichtempfänger führt. Damit werden effektiv zwei Empfangssignale erzeugt, die getrennt ausgewertet werden können. Dies wird ausgenutzt, um in Außenanwendungen Wettereinflüsse zu erkennen beziehungsweise Objekte trotz Wettereinflüssen robust zu erkennen, weil die Mie-Streuung an Wasserteilchen im Gegensatz zur Lambertschen Streuung an sonstigen Objekten die Polarisation erhält, so dass ein erkennbares Nebel- oder Niederschlagssignal entsteht. Allerdings befindet sich der Polarisationsteiler unmittelbar vor dem Lichtempfänger. Das Empfangslicht hat bis dorthin bereits sämtliche mögliche Störeffekte der Polarisation durch Frontscheibe, Drehspiegel und Empfangsoptik erfahren, und solche Effekte sind in EP 2 722 684 A1 auch nicht erkannt oder diskutiert.

Aus der DD 277 122 A1 ist ein Verfahren zur Analyse von Polarisationseigenschaften optischer Baugruppen bekannt. Es gibt keinen besonderen Bezug zu gattungsgemäßen Sensoren. Mit einer solchen Analyse könnte man die Problematik bestenfalls quantifizieren, aber nicht lösen.

Es ist daher Aufgabe der Erfindung, die Erfassung von Objekten mit polarisiertem Licht zu verbessern.

Diese Aufgabe wird durch einen optoelektronischen Sensor und ein Herstellungsverfahren einer Frontscheibe nach Anspruch 1 beziehungsweise 11 gelöst. Der erfindungsgemäße Sensor sendet mit einem Lichtsender einen polarisierten Lichtstrahl in einen Überwachungsbereich aus. Ein Lichtempfänger erzeugt aus dem zurückgeworfenen Lichtstrahl ein Empfangssignal. Dabei wird nur Empfangslicht mit bestimmten Polarisationseigenschaften zu dem Lichtempfänger durchgelassen. Das ermöglicht eine Unterdrückung von Fremdobjekten, die nicht den erwarteten Einfluss auf die Polarisationseigenschaften haben. Eine Steuer- und Auswertungseinheit erfasst Objekte in dem Überwachungsbereich anhand des Empfangssignals und stellt dabei insbesondere fest, ob der Lichtstrahl auf ein Fremdobjekt oder ein erwartetes Objekt bekannter polarisationsbeeinflussender Eigenschaften getroffen ist. Eine Frontscheibe schließt ein Gehäuse des Sensors im Bereich des Lichteintritts des ausgesandten Lichtstrahls beziehungsweise des Lichteintritts des zurückgeworfenen Lichtstrahls ab.

Die Erfindung geht nun von dem Grundgedanken aus, die ändernden Einflüsse der Komponenten des Sensors auf die Polarisation zu unterdrücken. Die Erfindung hat erkannt, dass eine praktisch spannungsdoppelbrechungsfreie Frontscheibe vorteilhaft und vor allem praktisch realisierbar ist, wofür weiter unten verschiedene vorteilhafte Maßnahmen bei der Herstellung angegeben werden. Die Frontscheibe eines erfindungsgemäßen Sensors dreht also die Polarisationsrichtung nicht oder jedenfalls kaum aufgrund spannungsinduzierter Doppelbrechung.

Die Erfindung hat den Vorteil, dass der Sensor polarisiertes Licht nutzen kann, das auf seinem Weg bis hin zum empfangsseitigen Filtern nicht durch unerwünschte Einflüsse in seinen Polarisationseigenschaften verändert wird. Die Objekterkennung wird dadurch robuster und zuverlässiger. Die spannungsdoppelbrechungsfreie Frontscheibe ist ein erheblicher Fortschritt, weil gemäß deren Bestimmung nicht verhinderbar ist, dass das polarisierte Licht hier hindurchtritt. Die übrigen optischen Komponenten können durch geschickte Anordnung aus dem relevanten Strahlengang des polarisierten Lichts herausgehalten werden, wie nachfolgend noch erläutert, nicht aber die Frontscheibe. Dafür werden in der Frontscheibe störende Effekte durch spannungsinduzierte Doppelbrechung vermieden oder zumindest sehr stark reduziert.

Dem Lichtsender ist bevorzugt ein sendeseitiges Polarisationsfilter und/oder dem Lichtempfänger ein empfangsseitiges Polarisationsfilter vorgeordnet. Alternativ wäre eine inhärent polarisierte Laserlichtquelle denkbar, wobei dies auch in Kombination mit einem sendeseitigen Polarisationsfilter nicht ausgeschlossen ist. Als weitere Alternative wäre ein Lichtempfänger vorstellbar, der nur Licht einer bestimmten Polarisationsrichtung registriert, wobei eine entsprechende Schicht auf dem Lichtempfänger auch als empfangsseitiges Polarisationsfilter aufgefasst werden kann.

Das sendeseitige Polarisationsfilter ist bevorzugt als letztes Element im Strahlengang des Lichtstrahls vor der Frontscheibe und/oder das empfangsseitige Polarisationsfilter als erstes Element im Strahlengang des zurückgeworfenen Lichtstrahls nach der Frontscheibe angeordnet. An sich wäre es naheliegend, Polarisationsfilter direkt nach dem Lichtsender beziehungsweise vor dem Lichtempfänger zu verwenden. Dort sind nämlich die Öffnungen und damit die erforderlichen Flächenausdehnungen der Polarisationsfilter sehr klein, und es würden kostengünstige, kleine Polarisationsfilter genügen. Bei einer solchen Anordnung müsste aber das polarisierte Licht nicht nur die Frontscheibe, sondern auch Sende- und Empfangsoptik und gegebenenfalls weitere Elemente wie Umlenkspiegel und dergleichen passieren, wodurch ungewollte Drehungen der Polarisationsrichtung oder andere Beeinflussungen von Polarisationseigenschaften hervorgerufen werden. Bei vorteilhafter Anordnung als letztes Element vor Lichtaustritt beziehungsweise erstes Element nach Lichteintritt wirken dagegen keine weiteren Elemente auf die Polarisationseigenschaften ein. Außerdem fällt an dieser Position kollimiertes Licht größtenteils senkrecht auf die Polarisationsfilter, so dass kostengünstige Polarisationsfilter mit geringeren Anforderungen möglich sind. Bei anderer Anordnung mit schräg auf die Polarisationsfilter eintreffenden Lichtstrahlen müssten diese mit einem wesentlich höheren Winkelbereich zurechtkommen, was nur hochwertige Polarisationsfilter leisten.

Da die Auswirkungen von Sende- und Empfangsoptik auf die Polarisationseigenschaften durch die vorteilhafte Anordnung außen im Sensor bei der Frontscheibe unerheblich werden, sind dafür kostengünstige Linsen und dergleichen etwa im Spritzgussverfahren aus Kunststoff möglich, denn etwaige Spannungsdoppelbrechung im Inneren des Sensors ist nicht mehr relevant. Die Anordnung außen im Sensor hat auch den Vorteil einer möglichen Umrüstung zur Reflektorerkennung mit überschaubarem Aufwand mit Hilfe von nachträglich eingefügten Polarisationsfiltern als Zusatzteil. Es muss dafür nur die Frontscheibe geöffnet werden, ein Eingriff in den inneren Strahlengang des Sensors, wo die Optiken oft unzugänglich gekapselt sind, ist nicht erforderlich.

Der Sensor weist bevorzugt einen in dem Überwachungsbereich angeordneten kooperativen Reflektor auf. Der ausgesandte Lichtstrahl wird dann so ausgerichtet, dass der Reflektor getroffen wird. Der Reflektor erzeugt eine bekannte Polarisationsdrehung, die zur gegenseitigen Verdrehung der Polarisationsfilter passt.

Der Sensor ist bevorzugt als Laserscanner mit einer beweglichen Ablenkeinheit zur periodischen Ablenkung des Lichtstrahls in dem Überwachungsbereich ausgebildet. Dadurch wird ein wesentlich größerer Überwachungsbereich erfassbar. Die Ablenkeinheit ist ein Drehspiegel in einen ansonsten statischen Sensor oder ein mitdrehendes Abtastmodul mit Lichtsender und Lichtempfänger.

Die Frontscheibe ist bevorzugt als umlaufende Haube geformt. Umlaufend bedeutet, dass die Frontscheibe zumindest den Winkelbereich des scannenden Lichtstrahls abdeckt. Vorteilhafterweise ist die Geometrie der Haube dafür diejenige eines Rotationskörpers um die Drehachse der Ablenkeinheit, wobei sich die Haube nicht über 360° erstrecken muss, sondern nur über den Winkelbereich, den der Lichtstrahl abscannt. Typische Formen entsprechend zumindest einem Abschnitt eines Zylinder- oder Kegelmantels, aber auch komplexere Konturen wie einer Kugel, eines Ellipsoids oder eines Kelches sind denkbar. Allgemein handelt es sich demnach bei der Haube um eine dreidimensionale Freiformfläche. Bei solchen Formen würde man zunächst eine ganz erhebliche Spannung und damit auch spannungsinduzierte Doppelbrechung erwarten, die aber durch die hier vorgestellten Maßnahmen verhindert werden kann.

Die Frontscheibe ist bevorzugt aus PMMA hergestellt. Dieses Material neigt weniger zu spannungsinduzierter Doppelbrechung und ist daher besonders geeignet.

Die Frontscheibe ist bevorzugt durch ein Spritzgussverfahren bei einem verminderten Druck, einer verminderten Temperatur und/oder einer verminderten Fließgeschwindigkeit hergestellt. Das sind drei Beispiele von Spritzparametern, die für möglichst geringe Verspannungen vorteilhaft herabgesetzt werden. Die Herstellung erfolgt insgesamt vorsichtiger und langsamer, lässt dem Material ausreichend Ruhe, sich in die gewünschte Form zu finden und diese spannungsfrei zu erhalten. Dadurch ist es möglich, die Spannungen erheblich zu reduzieren und Änderungen der Polarisationseigenschaften durch spannungsinduzierte Doppelbrechung praktisch gänzlich zu verhindern.

Der Druck wird dabei besonders bevorzugt um 5%-30%, die Temperatur um 5%-50%, und die Fließgeschwindigkeit um 5%-50% vermindert. Damit wird das Herabsetzen maßgeblicher Spritzparameter auch quantifiziert. Referenz für die relative Verminderung ist ein Spritzguss für eine herkömmliche Frontscheibe aus einem Kunststoff wie PC, bei dem allerdings erhebliche Spannungen verbleiben würden. Als besonders vorteilhaft haben sich 10%-20% weniger Druck, 25%-35% weniger Temperatur und 20%-30% weniger Fließgeschwindigkeit erwiesen.

Die Frontscheibe ist bevorzugt durch ein Spritzgussverfahren mit symmetrisch angeordneten Anspritzpunkten hergestellt. Die Symmetrie gilt bezüglich der optisch wirksamen Fläche, d.h. dem Durchtrittsbereich des ausgesandten beziehungsweise zurückgeworfenen Lichtstrahls. Anders ausgedrückt erfolgt die Einspritzung in das Spritzwerkzeug mit der Frontscheiben- oder Haubenform symmetrisch-mittig. Dazu sind insbesondere symmetrisch-sternförmig laufende Kanäle zur optisch wirksamen Fläche der Frontscheibe vorgesehen.

Bei dem erfindungsgemäßen Herstellungsverfahren wird eine Frontscheibe für einen optoelektronischen Sensor, insbesondere für eine der genannten Ausführungsformen eines erfindungsgemäßen optoelektronischen Sensors, spannungsdoppelbrechungsfrei hergestellt.

Dabei ist bevorzugt die Frontscheibe als umlaufende Haube für einen als Laserscanner ausgebildeten optoelektronischen Sensor geformt. Die Frontscheibe wird bevorzugt aus PMMA hergestellt. Die Frontscheibe wird bevorzugt in einem Spritzgussverfahren mit vermindertem Druck, verminderter Temperatur und/oder verminderter Fließgeschwindigkeit hergestellt, insbesondere einem um 5%-30% oder 10-20% verminderten Druck, einer um 5%-50% oder 25%-35% verminderten Temperatur und/oder einer um 5%-50% oder 20%-30% verminderten Fließgeschwindigkeit hergestellt. Die Frontscheibe wird bevorzugt in einem Spritzgussverfahren hergestellt, bei dem die Einspritzung in ein Spritzwerkzeug symmetrisch erfolgt. Die Vorteile dieser Vorgehensweisen bei der Herstellung wurden oben bereits genannt.

Bevorzugt wird ein Materialreservoir unterhalb der Einspritzdüse vorgehalten. Das ermöglicht eine gleichmäßige Entspannung vor dem Einfließen in das Spritzwerkzeug. Das Material tritt deshalb schon praktisch spannungsfrei ein, und gerade bei langsamem, schonendem Herstellen mit vermindertem Druck, Temperatur und Fließgeschwindigkeit bauen sich auch allenfalls geringfügige Spannungen auf, die sich nach dem Einfließen in das Spritzwerkzeug wieder auflösen können.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines optoelektronischen Sensors mit Polarisation und spannungsdoppelbrechungsfreier Frontscheibe; und
- Fig. 2: eine schematische Darstellung einer weiteren Ausführungsform eines optoelektronischen Sensors als Laserscanner, dessen doppelspannungsbrechungsfreie Frontscheibe die Form einer dreidimensionalen Haube aufweist.

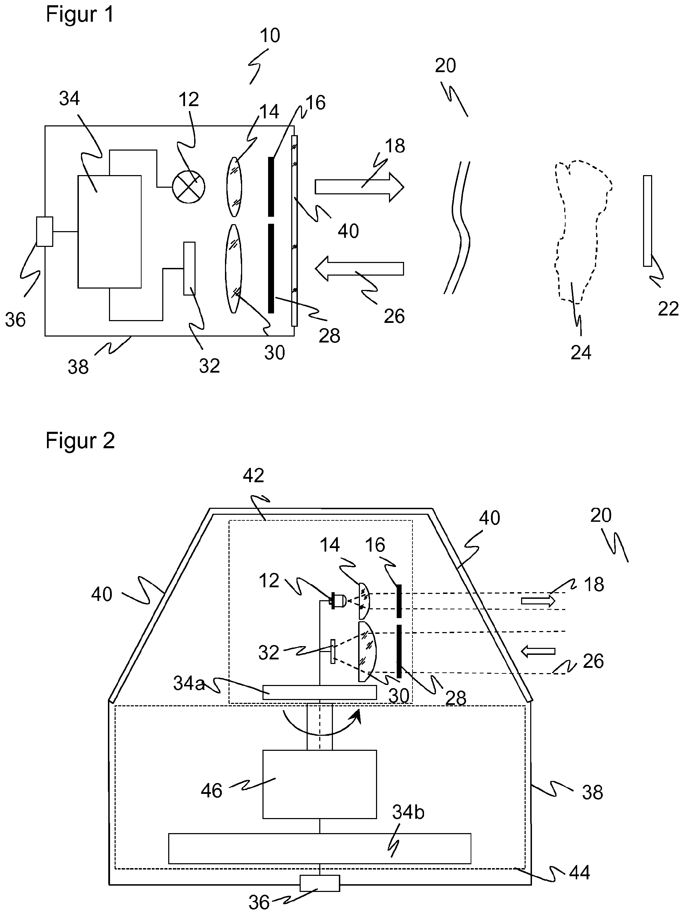

Figur 1 zeigt eine schematische Darstellung einer Reflexionslichtschranke als Beispiel eines erfindungsgemäßen optoelektronischen Sensors 10, die allein oder als Teil eines Lichtgitters eingesetzt wird. Ein Lichtsender 12 beispielsweise mit einer Laserdiode, die als VCSEL (Vertical-Cavity Surface-Emitting Laser) oder Kantenemitter ausgebildet sein kann, sendet mit Hilfe einer Sendeoptik 14 und durch ein sendeseitiges Polarisationsfilter 16 einen Lichtstrahl 18 in einen Überwachungsbereich 20 aus.

Dort trifft der Lichtstrahl 18 auf einen kooperativen Reflektor 22, der polarisationserhaltend ist beziehungsweise die Polarisation in definierter Weise dreht, so wie beispielsweise ein Retroreflektor. Falls sich ein Objekt 24 im Strahlengang des Lichtstrahls 18 befindet, so wird dieses Objekt 24 anstelle des Reflektors 22 getroffen. In beiden Fällen wird zumindest ein Teil des Lichtstrahls 18 reflektiert oder remittiert. Der zurückgeworfene Lichtstrahl 26 wird durch ein empfangsseitiges Polarisationsfilter 28 und eine Empfangsoptik 30 auf einen Lichtempfänger 32 geführt und dort beispielsweise mittels einer Photodiode, einer APD (Avalanche Photodiode) oder eines CCD- bzw. CMOS-Chips in ein elektrisches Empfangssignal umgesetzt. Die beiden Polarisationsfilter 16, 28 sind in der Polarisationsrichtung entsprechend einer von dem Reflektor 22 bewirkten Polarisationsdrehung zueinander verdreht. Ein optisches Übersprechen, insbesondere der jeweils ungenutzten, am Polarisationsfilter 16, 28 reflektierten Komponente, ist weitgehend durch den Aufbau vermieden und kann durch einen Empfangstubus oder dergleichen zusätzlich unterdrückt werden.

Eine Steuer- und Auswertungseinheit 34 ist mit dem Lichtsender 12 und dem Lichtempfänger 32 verbunden, um den Lichtstrahl 18 zu erzeugen beziehungsweise auf das elektrische Empfangssignal zuzugreifen. Die Steuer- und Auswertungseinheit 34 umfasst vorzugsweise mindestens einen Digitalbaustein, wie einen Mikroprozessor, ein ASIC oder ein FPGA, und dann wird das Empfangssignal ohne eigene Darstellung vor oder bei dem Übergang in die Steuer- und Auswertungseinheit 34 digitalisiert. Die Steuer- und Auswertungseinheit 34 erkennt, ob das Empfangssignal von dem Reflektor 22 oder einem Objekt 24 stammt. Ein Objekt 24 im Strahlengang weist die von dem Reflektor 22 erwartete Polarisationserhaltung und -drehung in aller Regel nicht auf. Daher kommt bei einem zurückgeworfenen Lichtstrahl 26 von dem Objekt 24 praktisch kein Licht auf dem Lichtempfänger 32 an, weil das empfangsseitige Polarisationsfilter 28 solches Licht blockiert, woran Reflektor 22 und Objekt 24 beispielsweise durch einen parametrierten oder eingelernten Schwellwertvergleich unterschieden werden. Bei der Unterscheidung muss berücksichtigt werden, dass Objekte 24 polarisiertes Licht unpolarisiert oder teilpolarisiert zurückwerfen können, wobei dann auch eine Komponente enthalten ist, die von dem empfangsseitigen Polarisationsfilter 28 durchgelassen wird. Eine Schwelle oder ein sonstiges Unterscheidungskriterium muss also in Abhängigkeit davon festgelegt sein, wieviel Licht von einem Objekt 24 über den gesamten relevanten Entfernungsbereich zu erwarten ist, das nicht der kooperative Reflektor 22 ist. Beispielsweise kann statt einer einfachen Schwelle eine entfernungsabhängige Signalintensitätskurve auf Basis erwarteter Signale von nicht kooperativen Objekten 24 hinterlegt werden. Je größer der Abstand zwischen der entfernungsabhängigen Signalkurve der nicht kooperativen Objekte 24 von dem kooperativen Reflektor 22 ist, umso besser ist eine Trennung möglich.

In einer Ausführungsform wird ein entsprechendes binäres Objekterkennungssignal auf eine hier als Schaltausgang ausgebildete Schnittstelle 36 gelegt. Der Schaltausgang ist somit im Zustand "Aus", solange der Lichtstrahl 18 auf den Reflektor 22 trifft, und im Zustand "Ein", wenn sich ein Objekt 24 vor den Reflektor 22 schiebt. Selbstverständlich können die Zustände auch invers repräsentiert sein. Das Schaltsignal kann für einen nachgelagerten Verarbeitungsprozess insbesondere in der Automatisierungstechnik verwendet werden. Eine bevorzugte Montage eines solchen Sensors 10 ist an einem Förderband, wo die geförderten Objekte 24 jeweils in den Lichtstrahl 18 ein- und wieder daraus austreten. Alternativ zu einem Schaltausgang sind auch andere Schnittstellen 36 denkbar, an denen auch andere Informationen ausgegeben werden können. Beispielsweise ist denkbar, dass die Steuer- und Auswertungseinheit 34 mit einem Phasen- oder Pulsverfahren eine Lichtlaufzeit und damit den Abstand zu dem Reflektor 22 oder Objekten 24 misst. Insbesondere kann so überwacht werden, ob sich der Reflektor 22 noch in einem vorgebbaren Abstandsintervall befindet oder nicht.

Der Sensor 10 wird von einem Gehäuse 38 geschützt, das in einem vorderen Bereich, in dem der ausgesandte Lichtstrahl 18 austritt und der zurückgeworfene Lichtstrahl 26 eintritt, mit einer Frontscheibe 40 abgeschlossen ist.

Der konkrete optische Aufbau des Sensors 10 in Figur 1 ist rein beispielhaft zu verstehen. Alternativ ist statt der gezeigten biaxialen Anordnung auch koaxiale beziehungsweise eine Autokollimationsanordnung möglich. Sende- und Empfangsoptik 14, 30 sind nur als einfache Sammellinse dargestellt, sie stehen aber stellvertretend für eine beliebige geeignete Optik.

Besonders vorteilhaft ist allerdings, wenn die Polarisationsfilter 16, 28 wie dargestellt so angeordnet sind, dass möglichst wenig optische Komponenten im Strahlengang zwischen Polarisationsfiltern 16, 28 und dem Überwachungsbereich 20 sind. Insbesondere muss das polarisierte Licht nicht durch die Sendeoptik 14 und die Empfangsoptik 30 hindurchtreten. Somit können beliebig komplexe Optiken 14, 30 beispielsweise mit Linsen aus Freiformflächen kostengünstig aus Kunststoff gefertigt werden. Sie besitzen dann vermutlich eine sehr hohe spannungsinduzierte Doppelbrechung, die sich aber wegen der Anordnung der Polarisationsfilter 16, 28 nicht auswirkt. Solche Linsen sind konvexe Gebilde, also übliche Sammellinsen und keine Fresnellinsen oder dergleichen, und sie sind eigene Komponenten unabhängig von der Frontscheibe 40.

Lediglich die Frontscheibe 40 verbleibt als einziges optisches Element zwischen den Polarisationsfiltern 16, 28 und dem Überwachungsbereich 20. Auch die Frontscheibe 40 ist oft eine Freiformfläche und aus Kunststoff gefertigt. Ohne die zu erläuternden erfindungsgemäßen Maßnahmen bewirkt die Frontscheibe 40 somit eine ungewollte Änderung der Polarisationsrichtung des Lichts. Aus optischer Sicht ideal wäre es, die Polarisationsfilter 16, 28 außen jenseits der Frontscheibe 40 anzuordnen, aber das ist nicht möglich, da sie dann nicht mehr von der Frontscheibe 40 geschützt und somit den äußeren Umwelteinflüssen ausgesetzt wären.

Deshalb wird die Frontscheibe 40 erfindungsgemäß spannungsdoppelbrechungsfrei gestaltet. Als eine vorteilhafte Maßnahme dafür ist sie dünn, soweit sich das mit einer riss- und spannungsfreien Herstellung vereinbaren lässt. Allgemein sind denkbare Faktoren, die eine spannungsdoppelbrechungsfreie Frontscheibe 40 möglich machen, das verwendete Material, die Geometrie und der Herstellungsprozess. Darunter ist die Geometrie regelmäßig schon durch die Konstruktion und das Optikdesign vorgegeben, und der Herstellungsprozess muss auch mit komplexen dreidimensionalen Geometrien umgehen können.

Es hat sich gezeigt, dass PMMA (Polymethylmethacrylat) ein besonders geeignetes Material ist. Es neigt zwar auch zur Spannungsdoppelbrechung, aber nicht so stark wie herkömmlich verwendete Kunststoffe, wobei hierfür PC (Polycarbonat) als typischer Vertreter herangezogen wird.

Bei der Herstellung der Frontscheibe 40 wird vorzugsweise ein Spritzgussverfahren eingesetzt, das aber bestimmte modifizierte Voraussetzungen einhält. Das betrifft zunächst allgemeine Spritzparameter, die vermindert werden, damit sich Spannungen gar nicht erst aufbauen oder vor dem Verfestigen in der gewünschten Endform noch abbauen können. Im Vergleich zu üblichen Spritzparametern bei einer herkömmlichen Frontscheibe aus Polycarbonat wird also eine erfindungsgemäße Frontscheibe 40 vorzugsweise bei Drücken, die um 10%-20%, und/oder bei Temperaturen, die um 25%-35%, und/oder bei Fließgeschwindigkeiten hergestellt, die um 20% bis 30% vermindert sind.

Diese Werte sind absichtlich nur relativ angegeben. Für eine spezielle Geometrie der Frontscheibe 40 könnten durchaus übliche Spritzparameter in absoluten Zahlenwerten für Polycarbonat als Bezugspunkt genannt werden, aus denen sich dann entsprechend der im vorigen Absatz angegebenen prozentualen Verminderungen auch absolute Zahlenwerte für erfindungsgemäße Herstellung insbesondere mit PMMA ableiten lassen. Je nach Geometrie weichen aber die Zahlenwerte für Polycarbonat ab. Relevant sind daher tatsächlich nicht die absoluten Werte, sondern die relativen Verminderungen wie angegeben.

Zudem erfolgt vorteilhafterweise die Einspritzung symmetrisch-mittig zur optisch wirksamen Fläche, also dem eigentlichen Durchtrittsbereich von Lichtstrahl 18 und zurückgeworfenem Lichtstrahl 26 der Frontscheibe 40. Unterstützt werden kann dies durch eine gleichmäßige Verteilung des eingespritzten Materials unmittelbar an der Einspritzdüse beispielsweise durch symmetrisch, sternförmig laufende Kanäle zur optischen Fläche. Ein Reservoir unterhalb der Einspritzdüse symmetrisch zur optischen Fläche unterstützt diesen Prozess und führt zu einer gleichmäßigen Entspannung vor dem Fließen in die gewünschte Werkzeugform. Vorteilhaft ist eine Glättung von bestimmten Bereichen zur Unterstützung der Entformung, um eine Rissbildung zu vermeiden

Der Sensor 10 gemäß Figur 1 ist vergleichsweise einfach, so dass auch eine weniger komplexe Geometrie der Frontscheibe 40 genügt. Mit dem genannten Herstellungsprozess sind jedoch auch anspruchsvolle dreidimensionale Freiformgeometrien einer spannungsdoppelbrechungsfreien Frontscheibe 40 möglich, wie dies eine Frontscheibe 40 oder Haube eines Laserscanners benötigt.

Figur 2 zeigt eine schematische Schnittdarstellung durch einen optoelektronischen Sensor 10 in einer Ausführungsform als Laserscanner. Der Laserscanner umfasst in grober Aufteilung eine bewegliche Abtasteinheit 42 und eine Sockeleinheit 44. Die Abtasteinheit 42 ist der optische Messkopf, während in der Sockeleinheit 44 weitere Elemente wie eine Versorgung, Auswertungselektronik, Anschlüsse und dergleichen untergebracht sind. Im Betrieb wird mit Hilfe eines Antriebs 46 der Sockeleinheit 44 die Abtasteinheit 42 in eine Drehbewegung versetzt, um so den Überwachungsbereich 20 periodisch abzutasten.

Die Abtasteinheit 42 ist im Prinzip aufgebaut wie der Sensor 10 gemäß Figur 1. Auf dieser recht schematischen Beschreibungsebene ist der Hauptunterschied, dass die Abtasteinheit 42 rotiert und somit nach und nach einen wesentlich größeren Überwachungsbereich 20 abtastet. Die Steuer- und Auswertungseinheit 34 kann beliebig auf Auswertungsbausteine 34a-b in der Abtasteinheit 42 und der Sockeleinheit 44 verteilt werden. Eine nicht dargestellte Kommunikationseinrichtung verbindet drahtlos oder beispielsweise per Schleifkontakt die Auswertungsbausteine 34a-b, sofern beide vorhanden sind, und allgemein die Elektronik in der Abtasteinheit 42 und in der Sockeleinheit 44. Entsprechend ist auch eine elektronische Versorgung der drehenden Abtasteinheit 42 vorgesehen.

Die Steuer- und Auswertungseinheit 34 wertet das Empfangssignal aus, steuert den Antrieb 46 und erhält das Signal einer nicht gezeigten Winkelmesseinheit, welche die jeweilige Winkelstellung der Abtasteinheit 42 bestimmt. Zur Auswertung wird vorzugsweise mit einem Lichtlaufzeitverfahren die Distanz zu einem angetasteten Objekt gemessen. Somit stehen nach jeder Scanperiode, also Umdrehung der Abtasteinheit 42, über den Winkel und die Entfernung zweidimensionale Polarkoordinaten aller Objektpunkte in einer Abtastebene des Überwachungsbereichs 20 zur Verfügung. An einer Schnittstelle 36 werden Auswertungsergebnisse bereitgestellt, beispielsweise ob ein in Figur 2 nicht gezeigter kooperativer Reflektor 22 noch erfasst ist oder nicht, beziehungsweise in welchen Winkeln und Abständen kooperative Reflektoren 22 erkannt werden.

Die Frontscheibe 40 bildet hier als umlaufende Haube den oberen Teil des Gehäuses 38 des Laserscanners. Umlaufend bedeutet, dass die Frontscheibe 40 den Winkelbereich abdeckt, den der scannende Lichtstrahl 18 beziehungsweise der zurückkehrende Lichtstrahl 26 überstreicht. Dazu ist die Frontscheibe 40 vorzugsweise als Rotationskörper um die Drehachse der Abtasteinheit 42 geformt. Da nicht jeder Laserscanner einen 360°-Sichtbereich aufweist, kann ein Rotationskörper über einen entsprechenden Winkelbereich genügen. Die Frontscheibe 40 kann anders als dargestellt im nicht optisch aktiven Bereich, insbesondere im Deckelbereich, wieder durch ein intransparentes Gehäuseteil abgeschlossen werden.

Die gezeigte Form der optisch aktiven Frontscheibe 40 ist ein Kegelstumpfmantel. Andere denkbare Formen sind ein zylindrischer Mantelabschnitt, Rotationskörper mit einer gekrümmten statt gerade Erzeugenden, die beispielsweise kelchförmig aussehen, Abschnitte einer Kugel oder eines Ellipsoids und ganz allgemein irgendeine geeignete, komplexe 3D-Freiform. Mit den oben genannten Materialien und Herstellungsschritten ist es unabhängig von der Geometrie möglich, dass die Frontscheibe 40 spannungsdoppelbrechungsfrei wird.

In den beiden gezeigten Aufbauten des Sensors 10 werden Polarisationsfilter 16, 28 eingesetzt, die auf absorbierender Basis funktionieren. Es ist alternativ denkbar, Polarisationsfilter mit reflektierender Funktionsweise einzusetzen. Allerdings sollte Sorge dafür getragen werden, dass die ungenutzte transmittierte Komponente im Sensor 10 keine unerwünschten Signale erzeugt. Der übrige optische Aufbau wäre dann entsprechend anzupassen, wobei prinzipiell auch reflexive Optiken 14, 30 denkbar sind. Weiterhin bleiben vorzugsweise die Polarisationsfilter 16, 28 die äußersten optischen Elemente, so dass nur die Frontscheibe 40 von polarisiertem Licht durchdrungen werden muss, und die Frontscheibe 40 selbst bleibt spannungsdoppelbrechungsfrei. Deshalb werden die Vorteile der Erfindung unabhängig vom Grundaufbau erhalten, ob mit transmissiven oder reflexiven Polarisationsfiltern 16, 28 und refraktiven oder reflexiven Optiken 14, 30.

## Patentansprüche

1. Optoelektronischer Sensor (10), der einen Lichtsender (12) zum Aussenden eines polarisierten Lichtstrahls (18) in einen Überwachungsbereich (20), einen Lichtempfänger (32) zum Empfangen des in dem Überwachungsbereich (20) zurückgeworfenen Lichtstrahls (26) mit bestimmten Polarisationseigenschaften und zum Erzeugen eines Empfangssignals, eine Steuer- und Auswertungseinheit (34) zum Erfassen von Objekten (22, 24) in dem Überwachungsbereich (20) durch Auswertung des Empfangssignals sowie eine Frontscheibe (40) aufweist,
**dadurch gekennzeichnet,**
**dass** die Frontscheibe (40) spannungsdoppelbrechungsfrei ist.

2. Sensor (10) nach Anspruch 1,
wobei dem Lichtsender (12) ein sendeseitiges Polarisationsfilter (16) und/oder dem Lichtempfänger (32) ein empfangsseitiges Polarisationsfilter (28) vorgeordnet ist.

3. Sensor (10) nach Anspruch 2,
wobei das sendeseitige Polarisationsfilter (16) als letztes Element im Strahlengang des Lichtstrahls (18) vor der Frontscheibe (40) und/oder das empfangsseitige Polarisationsfilter (28) als erstes Element im Strahlengang des zurückgeworfenen Lichtstrahls (26) nach der Frontscheibe (40) angeordnet sind.

4. Sensor (10) nach einem der vorhergehenden Ansprüche,
der einen in dem Überwachungsbereich (20) angeordneten kooperativen Reflektor (22) aufweist.

5. Sensor (10) nach einem der vorhergehenden Ansprüche,
der als Laserscanner mit einer beweglichen Ablenkeinheit (42, 46) zur periodischen Ablenkung des Lichtstrahls (18) in dem Überwachungsbereich (20) ausgebildet ist.

6. Sensor (10) nach Anspruch 5,
wobei die Frontscheibe (40) als umlaufende Haube geformt ist.

7. Sensor (10) nach einem der vorhergehenden Ansprüche,
wobei die Frontscheibe (40) aus PMMA hergestellt ist.

8. Sensor (10) nach einem der vorhergehenden Ansprüche,
wobei die Frontscheibe (40) durch ein Spritzgussverfahren bei einem verminderten Druck, einer verminderten Temperatur und/oder einer verminderten Fließgeschwindigkeit hergestellt ist.

9. Sensor (10) nach Anspruch 8,
wobei der Druck um 5%-30%, insbesondere 10-20%, die Temperatur um 5%-50%, insbesondere 25%-35% und die Fließgeschwindigkeit um 5%-50%, insbesondere 20%-30% vermindert ist.

10. Sensor (10) nach einem der vorhergehenden Ansprüche,
wobei die Frontscheibe (40) durch ein Spritzgussverfahren mit symmetrisch angeordneten Anspritzpunkten hergestellt ist.

11. Herstellungsverfahren einer Frontscheibe (40) für einen optoelektronischen Sensor (10), insbesondere für einen optoelektronischen Sensor (10) nach einem der vorhergehenden Ansprüche, **dadurch gekennzeichnet, dass** die Frontscheibe (40) spannungsdoppelbrechungsfrei hergestellt ist.

12. Verfahren nach Anspruch 11,
wobei die Frontscheibe (40) als umlaufende Haube für einen als Laserscanner ausgebildeten optoelektronischen Sensor (10) geformt ist.

13. Verfahren nach Anspruch 11 oder 12,
wobei die Frontscheibe (40) aus PMMA hergestellt wird.

14. Verfahren nach einem der Ansprüche 11 bis 13,
wobei die Frontscheibe (40) in einem Spritzgussverfahren mit vermindertem Druck, verminderter Temperatur und/oder verminderter Fließgeschwindigkeit hergestellt wird, insbesondere einem um 5%-30% oder 10-20% verminderten Druck, einer um 5%-50% oder 25%-35% verminderten Temperatur und/oder einer um 5%-50% oder 20%-30% verminderten Fließgeschwindigkeit hergestellt wird.

15. Verfahren nach einem der Ansprüche 11 bis 14,
wobei die Frontscheibe (40) in einem Spritzgussverfahren hergestellt wird, bei dem die Einspritzung in ein Spritzwerkzeug symmetrisch erfolgt und/oder bei dem ein Materialreservoir unterhalb der Einspritzdüse vorgehalten wird.
